# EUROPEAN PATENT APPLICATION

(11) **EP 4 255 064 A1**
(43) Date of publication of application: **04.10.2023**
(21) Application number: 20962772.8
(22) Date of filing: 25.11.2020
(51) Int. Cl.: H04W 72/04, H04L 5/00

(54) **METHOD FOR REPEATEDLY TRANSMITTING CONTROL CHANNEL, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: ZUO, Zhisong, Dongguan, Guangdong 523860 (CN); XU, Weijie, Dongguan, Guangdong 523860 (CN)
(74) Representative: Mewburn Ellis LLP
(86) International application number: PCT/CN2020/131525
(87) International publication number: WO 2022/109881

(57) **Abstract**

A method for transmitting a repetition of a control channel, a terminal device, and a network device are provided, which is conductive to enhancing a transmission coverage of an uplink control channel. The method includes the following. According to a slot configuration in a frame structure used by a terminal device, the terminal device determines a time-domain resource location for transmitting a repetition of an uplink control channel.

## Description

### TECHNICAL FIELD

Implementations of the disclosure relate to the field of communication, and in particular to a method for transmitting a repetition of a control channel, a terminal device, and a network device.

### BACKGROUND

In a new radio (NR) system, a terminal device can transmit repetitions of a physical uplink control channel (PUCCH) according to a configuration parameter (the number of slots, that is, nrofslots) of a PUCCH resource, where the repetitions are transmitted in a unit of slot. A transmission coverage of a control channel can be enhanced through transmitting repetitions in multiple slots.

In the NR system, a flexible slot allocation is supported, and there may be some uplink time-domain symbols and some downlink time-domain symbols in a slot, where the PUCCH is only transmitted in the uplink time-domain symbols. To transmit a repetition of the PUCCH, a start location and the number of available symbols in a slot for transmitting the PUCCH are both required to satisfy a resource configuration of the PUCCH. Otherwise, the repetition in the slot will be ignored by the terminal device. In practical, for a time division duplex (TDD) frame structure and other dynamic frame structures, most of slots cannot satisfy a requirement for transmitting the repetition of the PUCCH, and thus the number of slots in which repetitions are actually transmitted is too less to enhance the coverage of the control channel. Therefore, how to transmit the repetition of the PUCCH to enhance the coverage of the control channel is urgent.

### SUMMARY

A method for transmitting a repetition of a control channel, a terminal device, and a network device are provided in the disclosure, which is conductive to enhancing a transmission coverage of an uplink control channel.

In a first aspect, a method for transmitting a repetition of a control channel is provided. The method includes the following. According to a slot configuration in a frame structure used by a terminal device, the terminal device determines a time-domain resource location for transmitting a repetition of an uplink control channel.

In a second aspect, a method for transmitting a repetition of a control channel is provided. The method includes the following. According to a slot configuration in a frame structure used by a terminal device, a network device determines a time-domain resource location for transmitting a repetition of an uplink control channel by the terminal device.

In a third aspect, a terminal device is provided. The terminal device is configured to perform the method in the first aspect or implementations thereof. Specifically, the terminal device includes functional modules configured to perform the method in the first aspect or implementations thereof.

In a fourth aspect, a network device is provided. The network device is configured to perform the method in the second aspect or implementations thereof. Specifically, the network device includes functional modules configured to perform the method in the second aspect or implementations thereof.

In a fifth aspect, a terminal device is provided. The terminal device includes a processor and a memory. The memory is configured to store a computer program, and the processor is configured to invoke and execute the computer program stored in the memory to perform the method in the first aspect or implementations thereof.

In a sixth aspect, a network device is provided. The network device includes a processor and a memory. The memory is configured to store a computer program, and the processor is configured to invoke and execute the computer program stored in the memory to perform the method in the second aspect or implementations thereof.

In a seventh aspect, an apparatus is provided. The apparatus is configured to implement the method in the first or second aspect or implementations thereof. Specifically, the apparatus includes a processor. The processor is configured to invoke and execute a computer program stored in a memory to cause a device equipped with the apparatus to perform the method in the first or second aspect or implementations thereof.

In an eighth aspect, a computer-readable storage medium is provided. The computer-readable storage medium is configured to store a computer program. The computer program causes a computer to perform the method in the first or second aspect or implementations thereof.

In a ninth aspect, a computer program product is provided. The computer program product includes computer program instructions. The computer program instructions cause a computer to perform the method in the first or second aspect or implementations thereof.

In a tenth aspect, a computer program is provided. The computer program, when executed by a computer, causes the computer to perform the method in the first or second aspect or implementations thereof.

According to the above technical solutions, the terminal device can adaptively transmit repetitions of the uplink control channel according to the slot configuration in the frame structure, which can increase the number of transmissions of uplink control information within the same time, facilitating to enhancing a coverage of the uplink control channel at a cell edge.

### BRIEF DESCRIPTION OF THE DRAWINGS

FIG. 1 is a schematic architectural diagram of a communication system provided in implementations of the disclosure.
FIG. 2 is a schematic diagram of repetitions of a physical uplink control channel (PUCCH) in the related art.
FIG. 3 is a schematic diagram of a method for transmitting a repetition of a control channel according to implementations of the disclosure.
FIG. 4 is a schematic diagram of repetitions of an uplink control channel according to implementations of the disclosure.
FIG. 5 is a schematic diagram of a method for transmitting a repetition of a control channel according to implementations of the disclosure.
FIG. 6 is a schematic block diagram of a terminal device provided in implementations of the disclosure.
FIG. 7 is a schematic block diagram of a network device provided in implementations of the disclosure.
FIG. 8 is a schematic block diagram of a communication device provided in implementations of the disclosure.
FIG. 9 is a schematic block diagram of a chip provided in implementations of the disclosure.
FIG. 10 is a schematic block diagram of a communication system provided in implementations of the disclosure.

### DETAILED DESCRIPTION

The following will describe technical solutions in implementations of the disclosure with reference to the accompanying drawings in implementations of the disclosure. Apparently, implementations described herein are merely some rather than all implementations of the disclosure. Based on the implementations of the disclosure, all other implementations obtained by those of ordinary skill in the art without creative effort shall fall within the protection scope of the disclosure.

The technical solutions in implementations of the disclosure are applicable to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), a wireless fidelity (WiFi), a 5th-generation (5G) system, or other communication systems.

Generally, a traditional communication system supports a limited number of connections, which are also easy to implement. However, with development of communication technologies, a mobile communication system will not only support traditional communication but also support, for example, device-to-device (D2D) communication, machine-to-machine (M2M) communication, machine-type communication (MTC), vehicle-to-vehicle (V2V) communication, vehicle to everything (V2X) communication, etc. The implementations of the disclosure may also be applied to these communication systems.

Optionally, a communication system in implementations of the disclosure may be applied to a carrier aggregation (CA) scenario, a dual connectivity (DC) scenario, or a standalone (SA) network deployment scenario.

Optionally, the communication system in implementations of the disclosure may be applicable to an unlicensed spectrum scenario, where the unlicensed spectrum may also be considered as a shared spectrum. Alternatively, the communication systems in implementations of the disclosure are also applicable to a licensed spectrum scenario, where the unlicensed spectrum may also be considered as an unshared spectrum.

Various implementations of the disclosure are described in connection with a terminal device and a network device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, a user device, etc.

The terminal device may be a station (ST) in a WLAN, a cellular radio telephone, a cordless telephone, a session initiation protocol (SIP) telephone, a wireless local loop (WLL) station, a personal digital assistant (PDA) device, a handheld device with wireless communication functions, a computing device, other processing devices coupled with a wireless modem, an in-vehicle device, a wearable device, and a next generation communication system, for example, a terminal device in an NR network, a terminal device in a future evolved public land mobile network (PLMN), etc.

In implementations of the disclosure, the terminal device may be deployed on land, for example, deployed indoors or outdoors, or may be handheld, wearable, or vehicle-mounted. The terminal device may also be deployed on water, for example, on a ship, etc. The terminal device may also be deployed in the air, for example, on an airplane, an air balloon, a satellite, etc.

In implementations of the disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in a smart city, a wireless terminal device in smart home, etc.

By way of explanation rather than limitation, in implementations of the disclosure, the terminal device may also be a wearable device. The wearable device may also be called a wearable smart device, which is a generic term of wearable devices obtained through intelligent design and development on daily wearing products with wearable technology, for example, glasses, gloves, watches, clothes, accessories, shoes, etc. The wearable device is a portable device that nay be directly worn or integrated into clothes or accessories of a user. In addition to being a hardware device, the wearable device can also implement various functions through software support, data interaction, and cloud interaction. A wearable smart device in a broad sense includes, for example, a smart watch or smart glasses with complete functions and large sizes and capable of implementing independently all or part of functions without depending on a smart phone, and for example, various types of smart bands and smart jewelries for physical monitoring, of which each is dedicated to application functions of a certain type and required to be used together with other devices such as a smart phone.

In implementations of the disclosure, the network device may be a device for communicating with mobile devices, and the network device may be an access point (AP) in a WLAN, a base transceiver station (BTS) in a GSM or a CDMA, may also be a Node B (NB) in a WCDMA, and may also be an evolutional Node B (eNB or eNodeB) in a LTE, or a relay station or an AP, or an in-vehicle device, a wearable device, a network device or g-Node B (gNB) in an NR network, a network device in a future evolved PLMN, etc.

By way of explanation rather than limitation, in implementations of the disclosure, the network device may be movable, for example, the network device may be a mobile device. Optionally, the network device may be a satellite or a balloon station. For example, the satellite may be a low earth orbit (LEO) satellite, a medium earth orbit (MEO) satellite, a geosynchronous earth orbit (GEO) satellite, a high elliptical orbit (HEO) satellite, etc. Optionally, the network device may also be a base station disposed in land, water or other places.

In implementations of the disclosure, the network device can provide services for a cell, and the terminal device communicates with the network device through transmission resources (e.g., frequency-domain resources, or spectrum resources) used by the cell. The cell may be a cell corresponding to the network device (e.g., a base station). The cell may correspond to a macro base station, or may correspond to a base station corresponding to a small cell. The small cell may include a metro cell, a micro cell, a pico cell, a femto cell, and the like. These small cells are characterized by small coverage and low transmission power and are applicable to provide data transmission service with high-rate.

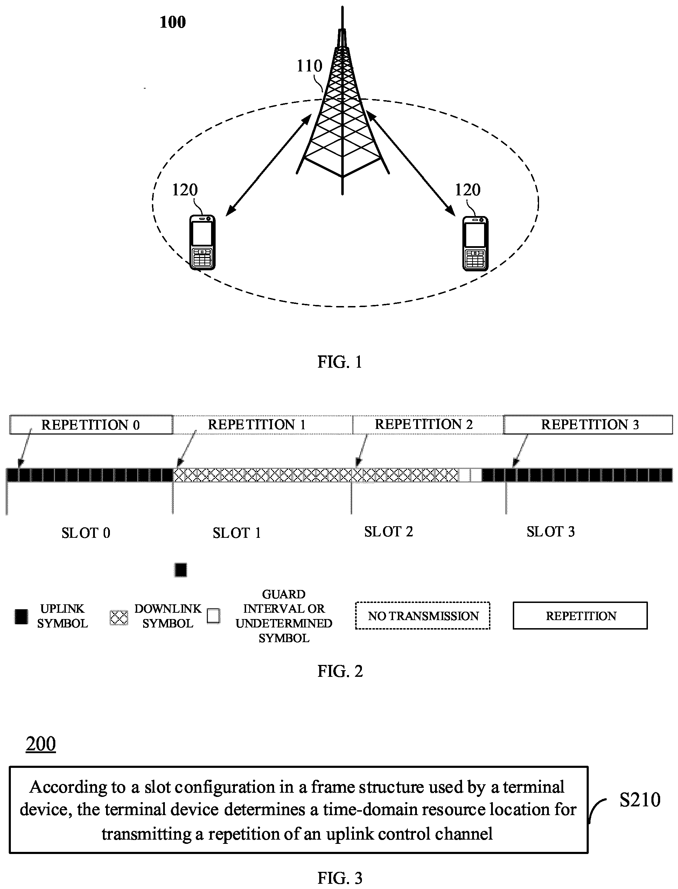

Exemplarily, FIG. 1 illustrates a communication system 100 to which implementations of the disclosure are applied. The communication system 100 may include a network device 110. The network device 110 may be a device that can communicate with a terminal device 120 (also referred to as "communication terminal" or "terminal"). The network device 110 can provide a communication coverage for a specific geographical area and communicate with terminal devices in the coverage area.

FIG. 1 exemplarily illustrates one network device and two terminal devices. Optionally, the communication system 100 may include multiple network devices, and there may be other numbers of terminal devices within coverage of each of the network devices. Implementations of the disclosure are not limited in this regard.

Optionally, the communication system 100 may further include other network entities such as a network controller, a mobile management entity, or the like. Implementations of the disclosure are not limited in this regard.

It should be understood that, in implementations of the disclosure, a device with communication functions in a network/system may be referred to as a "communication device". Taking the communication system 100 illustrated in FIG. 1 as an example, the communication device may include the network device 110 and the terminal device(s) 120 that have communication functions. The network device 110 and the terminal device(s) 120 may be the devices described above, which will not be repeated again herein. The communication device may further include other devices such as a network controller, a mobile management entity, or other network entities in the communication system 100, and implementations of the disclosure are not limited in this regard.

It should be understood that, the terms "system" and "network" herein are usually used interchangeably throughout the disclosure. The term "and/or" herein only describes an association relationship between associated objects, which means that there may be three relationships. For example, A and/or B may mean A alone, both A and B exist, and B alone. In addition, the character "f" herein generally indicates that the associated objects are in an "or" relationship.

It should be understood that, the term "indication" in implementations of the disclosure may be a direct indication, an indirect indication, or an indication of having an associated relationship. For example, A indicates B, which may mean that A directly indicates B, for example, B may be obtained through A. It may also mean that A indirectly indicates B, for example, A indicates C, and B may be obtained through C. It may also mean that there is an association relationship between A and B.

In descriptions of implementations of the disclosure, the term "corresponding to" may mean that there is a direct correspondence or an indirect correspondence between the two, or an associated relationship, a relationship of indicating and being indicated, a relationship of configuring and being configured, etc.

In implementations of the disclosure, the "predefinition" can be implemented by prestoring in devices (e.g., including the terminal device and the network device) corresponding codes, tables or other means available for indicating relevant information, which are not limited in the disclosure. For example, the predefinition may refer to a definition in a protocol.

In implementations of the disclosure, the "protocol" may refer to a standard protocol in the field of communication, which may include, for example, a LTE protocol, an NR protocol and related protocols applied to future communication systems, which is not limited in this disclosure.

In order to understand the technical solutions of implementations of the disclosure, the technical solutions of the disclosure will be described in detail below through specific implementations. The following related technologies may be arbitrarily combined with the technical solutions of implementations of the disclosure as alternative solutions, all of which fall into the protection scope of implementations of the disclosure. Implementations of the disclosure include at least part of the following contents.

In the NR system, long physical uplink control channel (PUCCH) formats such as PUCCH format 1, PUCCH format 3, and PUCCH format 4 can be supported. Since the long PUCCH formats occupy more time-domain symbols, the long PUCCH formats have better coverage than short PUCCH formats. Characteristics of the three PUCCH formats are illustrated in Table 1.

**Table 1**

| PUCCH format | number of time-domain symbols | UCI payload | number of frequency-domain resource blocks | multi-user multiplexing capacity |
|---|---|---|---|---|
| PUCCH format 1 | 4∼14 | 1∼2 bits | 1 physical resource block (PRB) | ZC sequences of length 12 in the frequency-domain, OCC spreading in the time-domain, where the spreading factor is 2~7. |
| PUCCH format 3 | | more than 2 bits | 1∼16 PRBs, the number satisfies product of power of 2, power of 3, and power of 5 | Not supported |
| PUCCH format 4 | | more than 2 bits | 1 PRB | OCC spreading in frequency-domain, where the spreading factor is 2 or 4. |

As can be seen from Table 1, a transmission in the long PUCCH format can occupy at most one slot. The long PUCCH format that occupies more than one slot can be transmitted through repetitions.

The terminal device can transmit repetitions of a PUCCH according to a configuration parameter (nrofslots) of a PUCCH resource, where the repetitions are transmitted in a unit of slot. A transmission coverage of a control channel can be enhanced through transmitting repetitions in multiple slots.

In the NR system, a flexible slot allocation is supported, and there may be some uplink time-domain symbols and some time-domain symbols in a slot, where the PUCCH is only transmitted in the uplink time-domain symbols. To transmit a repetition of the PUCCH, a start location and the number of available symbols in a slot for transmitting the PUCCH are both required to satisfy a resource configuration of the PUCCH. Otherwise, the repetition in the slot will be ignored by the terminal device.

FIG. 2 is a schematic diagram illustrating multi-slot transmissions of a PUCCH. As illustrated in FIG. 2, since symbols in slot 1 and slot 2 are mainly configured as downlink time-domain symbols, the number of uplink time-domain symbols does not satisfy a transmission requirement for the PUCCH. Therefore, the terminal device ignores transmissions in slot 1 and slot 2, and only transmits repetitions in slot 0 and slot 3. Therefore, when four repetitions are configured for the terminal device, the terminal device only transmits two repetitions actually, thereby narrowing a transmission coverage of the PUCCH.

To this end, a method for transmitting a repetition of a control channel is provided in implementations of the disclosure, where a time-domain resource location for transmitting the repetition of the control channel can be determined adaptively according to a slot configuration (or referred to as a slot allocation) in a frame structure, and for the same number of slots, the control channel can be transmitted more times. Thereby, the transmission coverage of the control channel can be enhanced.

FIG. 3 is a schematic diagram of a method 300 for transmitting a repetition of a control channel according to implementations of the disclosure. The method 300 may be performed by the terminal device in the communication system illustrated in FIG. 1. As illustrated in FIG. 3, the method 300 includes at least part of the following.

At S310, according to a slot configuration in a frame structure used by the terminal device, the terminal device determines a time-domain resource location for transmitting a repetition of an uplink control channel.

Optionally, in some implementations, the uplink control channel may be, for example, a PUCCH, and may be used for carrying control information. As an example, the control information may include feedback information such as an acknowledgement (ACK), a negative acknowledgement (NACK), etc. for a physical downlink shared channel (PDSCH) scheduled by downlink control information (DCI).

Optionally, in implementations of the disclosure, the terminal device can support a flexible slot configuration, where the slot configuration is used for configuring symbol directions (or types) and an arrangement of time-domain symbols in one slot. Symbols in one slot can be configured to include at least one of an uplink time-domain symbol, a downlink time-domain symbol, or a flexible time-domain symbol.

It should be understood that, types and numbers of the time-domain symbols in one slot are not specifically limited in implementations of the disclosure. As an example, 14 symbols in one slot can be configured as time-domain symbols with the same direction, for example, all downlink time-domain symbols, all uplink time-domain symbols, or all flexible time-domain symbols. Alternatively, 14 symbols in one slot can be configured as a combination of uplink time-domain symbols and downlink time-domain symbols. Alternatively, 14 symbols in one slot can be configured as a combination of uplink time-domain symbols and flexible time-domain symbols. Alternatively, 14 symbols in one slot can be configured as a combination of uplink time-domain symbols, downlink time-domain symbols, and flexible time-domain symbols.

It should be further understood that, the arrangement of time-domain symbols in one slot is not specifically limited in implementations of the disclosure. For example, the uplink time-domain symbols, the downlink time-domain symbols, and the flexible time-domain symbols in one slot may be arranged continuously or in discrete.

Optionally, in some implementations, the time-domain resource location for transmitting the repetition of the uplink control channel may include at least one of a slot for transmitting the repetition of the uplink control channel, or a time-domain symbol to which the uplink control channel is mapped in the slot for transmitting the repetition of the uplink control channel.

Optionally, the slot for transmitting the repetition of the uplink control channel may include each slot for transmitting a repetition of the uplink control channel, for example, a starting slot, an ending slot, etc.

Optionally, the time-domain symbol to which the uplink control channel is mapped in the slot for transmitting the repetition of the uplink control channel may refer to a time-domain symbol(s) to which the uplink control channel is mapped in each slot for transmitting a repetition of the uplink control channel, for example, a starting time-domain symbol, an ending time-domain symbol, etc.

In the following, the manner of determining the slot for transmitting the repetition of the uplink control channel is described with specific implementations.

In some implementations, the starting slot for transmitting the repetition of the uplink control channel can be determined according to a slot and a slot offset *K1* indicated by the DCI, where the slot is for transmitting the PDSCH, the slot offset may be an offset of a slot for transmitting control information corresponding to the PDSCH relative to the slot for transmitting the PDSCH, and the uplink control channel is for carrying the control information.

Optionally, the control information corresponding to the PDSCH may include feedback information for the PDSCH, such as an ACK, a NACK, etc.

In some implementations, according to a slot configuration of each slot, the terminal device can determine, from the starting slot, the slot for transmitting the repetition of the uplink control channel.

Optionally, the terminal device can determine a slot with available time-domain symbols satisfying a specific condition as the slot for transmitting the repetition of the uplink control channel.

In implementations of the disclosure, an uplink time-domain symbol can be used for transmitting uplink information. Therefore, it can be considered that a symbol direction of the uplink time-domain symbol is the same as a transmission direction of the uplink information. In some cases, a flexible time-domain symbol can also be used for transmitting the uplink information. Therefore, in some cases, it can also be considered that a symbol direction of the flexible time-domain symbol is the same as the transmission direction of the uplink information.

For a transmission of the uplink control channel, an available time-domain symbol in one slot may include a time-domain symbol with a symbol direction the same as a transmission direction of the uplink control channel, for example, the uplink time-domain symbol and/or the flexible time-domain symbol.

As an example, the specific condition may include that the number of available time-domain symbols in the slot is greater than or equal to a minimum number of time-domain symbols that can be transmitted in an uplink control channel format corresponding to the uplink control channel.

For example, the uplink control channel format corresponding to the uplink control channel is PUCCH format 1 described above, and a minimum number of time-domain symbols that can be transmitted in PUCCH format 1 is 4. If the number of available time-domain symbols in one slot is greater than or equal to 4, it can be determined that the slot can be used for transmitting the repetition of the uplink control channel.

As another example, the specific condition may include that the number of available time-domain symbols in the slot is greater than or equal to a second threshold. Optionally, the second threshold may be 1, 2, 3, 4, etc.

The terminal device can determine, sequentially from the starting slot, a slot for each repetition of the uplink control channel according to the above conditions.

In some implementations, if the number of transmissions of the uplink control channel reaches a preconfigured number of repetitions (e.g., nrofslots), the terminal device stops transmitting the uplink control channel. In this case, a slot in which the number of transmissions of the uplink control channel reaches the preconfigured number of repetitions is an ending slot for transmitting repetitions of the uplink control channel by the terminal device.

It should be understood that, since the repetitions of the uplink control channel are transmitted in a unit of slot, a preconfigured number of slots for transmissions can be considered as the preconfigured number of repetitions.

It should be noted that, the number of repetitions may be preconfigured by a network device through higher-layer signaling (e.g., radio resource control (RRC)), or may be configured through a downlink control channel, or may be predefined. The manner of configuring the number of repetitions is not limited in the disclosure.

In other implementations, according to a specific slot offset threshold, the terminal device can determine when to stop transmitting the uplink control channel.

Optionally, the slot offset threshold may be referenced to the starting slot.

Optionally, the slot offset threshold is greater than nrofslots.

It should be understood that, in implementations of the disclosure, a unit of repetitions in time domain is a slot as an example, which is however not limited in the disclosure. In other implementations, according to an actual requirement for resource allocation, the repetitions may be transmitted in other units in time domain, such as an orthogonal frequency division multiplexing (OFDM) symbol.

In some implementations, when a slot offset of a slot determined for transmitting the repetition of the uplink control channel relative to the starting slot is greater than or equal to the slot offset threshold, the terminal device stops transmitting the uplink control channel.

Optionally, the slot offset threshold may be predefined, or may be configured by the network device.

For example, the network device can configure the slot offset threshold to the terminal device when configuring the number of repetitions.

The manner of determining the slot for transmitting the repetition of the uplink control channel is described above. In the following, the manner of determining a time-domain symbol to which the uplink control channel is mapped in each slot for transmitting the repetition of the uplink control channel is described with specific implementations.

In some implementations, the terminal device determines a time-domain symbol to which the uplink control channel is mapped in each slot, according to a symbol direction of each time-domain symbol in each slot for transmitting the repetition of the uplink control channel and the transmission direction of the uplink control channel.

That is, the terminal device can map the uplink control channel according to a time-domain symbol configuration of each slot for transmitting the repetition of the uplink control channel, where the time-domain symbol configuration may include, for example, a symbol direction configuration, and continuity of the available time-domain symbols.

Optionally, a starting symbol location from which the terminal device maps the uplink control channel may be a preconfigured starting symbol location (e.g., a symbol location indicated by a higher layer parameter startingSymbolIndex), or may be other starting symbol locations, for example, a first available time-domain symbol in the slot. For the determination of availability of the time-domain symbols, reference can be made to the above related descriptions, which is not repeated herein.

Optionally, the number of time-domain symbols to which the uplink control channel is mapped in a slot can be determined according to an arrangement of the available time-domain symbols in the slot.

Optionally, the number of time-domain symbols to which the uplink control channel is mapped in a slot may be *N,* where TV is a preconfigured number of time-domain symbols (e.g., nrofsymbols) available for transmitting the uplink control channel in the slot, that is, a maximum number of time-domain symbols for transmitting the uplink control channel in the slot.

Optionally, the number of time-domain symbols to which the uplink control channel is mapped in a slot may be the number of continuous available time-domain symbols starting from the preconfigured starting symbol, the number of continuous available time-domain symbols starting from the first available time-domain symbol, or a maximum number of continuous available time-domain symbols in a slot.

In example 1, in a slot for transmitting the repetition of the uplink control channel by the terminal device, the uplink control channel is mapped to *N* time-domain symbols starting from the preconfigured starting symbol, where *TV* is a preconfigured number of time-domain symbols (e.g., nrofsymbols) available for transmitting the uplink control channel in the slot.

That is, the terminal device can map the uplink control channel to *TV* available time-domain symbols starting from a preconfigured time-domain symbol.

In some implementations, the terminal device can map the uplink control channel in the manner in example 1 when the following conditions are satisfied. A symbol direction of the preconfigured starting symbol is the same as the transmission direction of the uplink control channel, that is, the preconfigured starting symbol is an available time-domain symbol, and a symbol direction of each of the *TV* time-domain symbols starting from the preconfigured starting symbol is the same as the transmission direction of the uplink control channel, where *N* is the preconfigured number of time-domain symbols available for transmitting the uplink control channel in a slot, that is, the number of available time-domain symbols starting from the preconfigured starting symbol is greater than or equal to *N.*

In example 2, in a slot for transmitting the repetition of the uplink control channel by the terminal device, the uplink control channel is mapped to *M* time-domain symbols starting from a first starting symbol.

As an example, the first starting symbol is a first time-domain symbol in the slot with a symbol direction the same as the transmission direction of the uplink control channel, that is, the first available time-domain symbol in the slot.

As another example, the first starting symbol is a time-domain symbol with a foremost time-domain location among a maximum number of continuous available time-domain symbols in the slot.

As another example, *M* may be a preconfigured number of time-domain symbols available for transmitting the uplink control channel in a slot, that is, *N* described above.

As another example, *M* may be the number of available time-domain symbols starting from the first starting symbol.

As another example, *M* is a smaller of the preconfigured number of time-domain symbols available for transmitting the uplink control channel in a slot and the number of available time-domain symbols starting from the first starting symbol.

Optionally, in some implementations, the terminal device maps the uplink control channel in the manner in example 2 when at least one of following conditions is not satisfied. A symbol direction of the preconfigured starting symbol is the same as the transmission direction of the uplink control channel, or a symbol direction of each of *N* time-domain symbols starting from the preconfigured starting symbol is the same as the transmission direction of the uplink control channel, where *N* is a preconfigured number of time-domain symbols available for transmitting the uplink control channel in a slot.

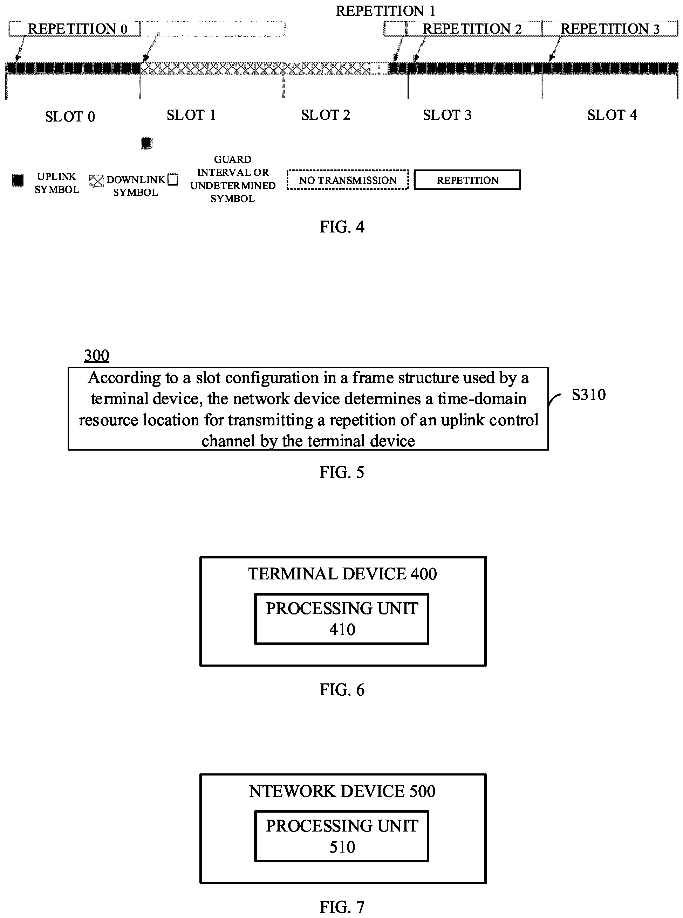

Taking the scenario in FIG. 2 as an example, FIG. 4 illustrates a manner of transmitting repetitions of an uplink control channel according to implementations of the disclosure. As illustrated in FIG. 2, two uplink time-domain symbols are available for an uplink transmission in slot 2. However, since the number of uplink time-domain symbols does not satisfy the number required for the uplink control channel, the terminal device ignores a repetition in slot 2. In implementations of the disclosure, the terminal device can map the uplink control channel to the two available uplink time-domain symbols in slot 2, so that missing of a transmission of the uplink control channel in the slot can be avoided. In this way, the number of transmissions of the uplink control channel is increased in the same four slots. In addition, when a preconfigured number of transmissions is not reached, the terminal device can further determine a slot(s) that satisfies the conditions in subsequent slots, and then transmit a repetition of the uplink control channel in the slot, thereby enhancing the transmission coverage of the control channel.

Therefore, based on the above technical solutions, the terminal device can adaptively transmit repetitions of the uplink control channel according to the slot configuration in the frame structure, which can increase the number of transmissions of uplink control information in the same time, facilitating to enhancing a coverage of the uplink control channel at a cell edge.

In some scenarios, when the number of bits of the control information carried in the uplink control channel is less than a certain threshold, a receiving end can combine information according to control information carried in multiple received repetitions of the uplink control channel, to improve performance of reception. Therefore, in some implementations, the terminal device may transmit the repetitions adaptively as described above when the number of bits of the control information carried in the uplink control channel is less than or equal to the certain threshold, and the terminal device may transmit the repetitions in a manner in related art when the number of bits is greater than the threshold.

Optionally, the threshold may be 11, 22, or other positive integers.

It should be noted that, in implementations of the disclosure, the repetition of the uplink control channel is taken as an example for illustration, which is not limited in the disclosure. In other implementations, the method for transmitting the repetition of the uplink control channel is also applicable to a downlink control channel (e.g., a physical downlink control channel (PDCCH)) or a sidelink control channel (e.g., a physical sidelink control channel (PSCCH)), or applicable to other channels, such as a data channel (e.g., a physical uplink shared channel (PUSCH), a physical downlink shared channel (PDSCH), a physical sidelink shared channel (PSSCH), etc.). In case of insufficient time-domain resources, transmission performance can be improved through transmitting repetitions of data.

The method for transmitting the repetition of the control channel according to implementations of the disclosure is described in detail above from the view of the terminal device with reference to FIG. 3 and FIG. 4. A method for transmitting a repetition of a control channel according to another implementation of the disclosure is described in detail below from the view of the network device with reference to FIG. 5. It should be understood that, descriptions on the network device side corresponds to the descriptions on the terminal device side. For similar descriptions, reference can be made to the above, which will not be repeated herein to avoid redundancy.

FIG. 5 is a schematic flowchart of a method 300 for transmitting a repetition of a control channel according to another implementation of the disclosure. The method 300 may be performed by the network device in the communication system illustrated in FIG. 1. As illustrated in FIG. 5, the method 300 includes the following.

At S310, according to a slot configuration in a frame structure used by a terminal device, the network device determines a time-domain resource location for transmitting a repetition of an uplink control channel by the terminal device.

In implementations of the disclosure, the network device can obtain the slot configuration of the terminal device. Therefore, the network device can determine the time-domain resource location for the terminal device to transmit the uplink control channel in a similar manner as described above for the terminal device, and further receive the repetition of the uplink control channel from the terminal device at the time-domain resource location. For the specific implementations, reference can be made to related implementations in the method 200, which will not be repeated herein for the sake of simplicity.

Optionally, in some implementations, the time-domain resource location for transmitting the repetition of the uplink control channel includes at least one of: a slot for transmitting the repetition of the uplink control channel, or a time-domain symbol to which the uplink control channel is mapped in the slot for transmitting the repetition of the uplink control channel.

Optionally, in some implementations, according to the slot configuration in the frame structure used by the terminal device, the network device determines the time-domain resource location for transmitting the repetition of the uplink control channel by the terminal device as follows. According to the slot configuration in the frame structure used by the terminal device, the network device determines, from a starting slot, a slot for transmitting a *k^{th}* repetition of the uplink control channel by the terminal device, where *k* is a positive integer.

Optionally, in some implementations, the starting slot is determined according to a slot and a slot offset indicated by DCI, where the slot is for transmitting a PDSCH, the slot offset is an offset of a slot for transmitting control information corresponding to the PDSCH relative to the slot for transmitting the PDSCH, and the uplink control channel is for carrying the control information.

Optionally, in some implementations, the slot for transmitting the *k^{th}* repetition of the uplink control channel by the terminal device satisfies at least one of the number of available time-domain symbols in the slot being greater than or equal to a minimum number of time-domain symbols that can be transmitted in an uplink control channel format corresponding to the uplink control channel, or the number of available time-domain symbols in the slot being greater than or equal to a second threshold.

Optionally, in some implementations, the available time-domain symbols in the slot include uplink time-domain symbols and/or flexible time-domain symbols in the slot.

Optionally, in some implementations, a slot in which the number of transmissions of the uplink control channel reaches a preconfigured number of repetitions is an ending slot for transmitting repetitions of the uplink control channel by the terminal device.

Optionally, in some implementations, according to the slot configuration in the frame structure used by the terminal device, the network device determines the time-domain resource location for transmitting the repetition of the uplink control channel as follows. The network device determines a time-domain symbol to which the uplink control channel is mapped in each slot, according to a symbol direction of each time-domain symbol in each slot for transmitting the repetition of the uplink control channel by the terminal device and a transmission direction of the uplink control channel.

Optionally, in some implementations, in a slot for transmitting the repetition of the uplink control channel by the terminal device, the uplink control channel is mapped to *M* time-domain symbols starting from a first starting symbol, where the first starting symbol is a first time-domain symbol in the slot with a symbol direction the same as the transmission direction of the uplink control channel, and *M* is a smaller of a first value and a second value, where the first value is a preconfigured maximum number of time-domain symbols available for transmitting the uplink control channel in a slot, and the second value is the number of symbols that start from the first starting symbol and each have a symbol direction the same as the transmission direction of the uplink control channel.

Optionally, in some implementations, the uplink control channel is mapped to the *M* time-domain symbols starting from the first starting symbol when at least one of following conditions is not satisfied: a symbol direction of a preconfigured starting symbol is the same as the transmission direction of the uplink control channel, or a symbol direction of each of *N* time-domain symbols starting from the preconfigured starting symbol is the same as the transmission direction of the uplink control channel, where *TV* is a preconfigured number of time-domain symbols available for transmitting the uplink control channel in a slot.

Optionally, in some implementations, in a slot for transmitting the repetition of the uplink control channel by the terminal device, the uplink control channel is mapped to *N* time-domain symbols starting from a preconfigured starting symbol, where *N* is a preconfigured number of time-domain symbols available for transmitting the uplink control channel in a slot.

Optionally, in some implementations, the uplink control channel is mapped to the *TV* time-domain symbols starting from the preconfigured starting symbol when the following conditions are satisfied: a symbol direction of the preconfigured starting symbol is the same as the transmission direction of the uplink control channel, and a symbol direction of each of the *TV* time-domain symbols starting from the preconfigured starting symbol is the same as the transmission direction of the uplink control channel, where *TV* is the preconfigured number of time-domain symbols available for transmitting the uplink control channel in a slot.

The method implementations of the disclosure are described in detail above with reference to FIG. 3 to FIG. 5. Apparatus implementations of the disclosure are described in detail below with reference to FIG. 6 to FIG. 10. It should be understood that, the apparatus implementations correspond to the method implementations. For similar descriptions, reference can be made to the method implementations.

FIG. 6 is a schematic block diagram of a terminal device 400 according to implementations of the disclosure. As illustrated in FIG. 6, the terminal device 400 includes a processing unit 410. The processing unit 410 is configured to determine, according to a slot configuration in a frame structure used by the terminal device, a time-domain resource location for transmitting a repetition of an uplink control channel.

Optionally, in some implementations, the time-domain resource location for transmitting the repetition of the uplink control channel includes at least one of: a slot for transmitting the repetition of the uplink control channel, or a time-domain symbol to which the uplink control channel is mapped in the slot for transmitting the repetition of the uplink control channel.

Optionally, in some implementations, the processing unit 410 is further configured to determine the time-domain resource location for transmitting the repetition of the uplink control channel according to the slot configuration in the frame structure used by the terminal device, when the number of bits of control information carried in the uplink control channel is less than or equal to a first threshold.

Optionally, in some implementations, the first threshold is 11 or 22.

Optionally, in some implementations, the processing unit 410 is further configured to determine, from a starting slot, a slot for transmitting a *k^{th}* repetition of the uplink control channel, according to the slot configuration in the frame structure used by the terminal device, where k is a positive integer.

Optionally, in some implementations, the starting slot is determined according to a slot and a slot offset indicated by DCI, where the slot is for transmitting a PDSCH, the slot offset is an offset of a slot for transmitting control information corresponding to the PDSCH relative to the slot for transmitting the PDSCH, and the uplink control channel is for carrying the control information.

Optionally, in some implementations, the slot for transmitting the *k^{th}* repetition of the uplink control channel by the terminal device satisfies at least one of: the number of available time-domain symbols in the slot being greater than or equal to a minimum number of time-domain symbols that can be transmitted in an uplink control channel format corresponding to the uplink control channel, or the number of available time-domain symbols in the slot being greater than or equal to a second threshold.

Optionally, in some implementations, the available time-domain symbols in the slot include uplink time-domain symbols and/or flexible time-domain symbols in the slot.

Optionally, in some implementations, a slot in which the number of transmissions of the uplink control channel reaches a preconfigured number of repetitions is an ending slot for transmitting repetitions of the uplink control channel by the terminal device.

Optionally, in some implementations, the terminal device 400 further includes a communication unit. The communication unit is configured to stop the repetition of the uplink control channel when a slot offset of a slot for a *k^{th}* repetition of the uplink control channel relative to a starting slot is greater than a slot offset threshold, where k is less than a preconfigured number of repetitions.

Optionally, in some implementations, the processing unit 410 is further configured to determine a time-domain symbol to which the uplink control channel is mapped in each slot, according to a symbol direction of each time-domain symbol in each slot for transmitting the repetition of the uplink control channel and a transmission direction of the uplink control channel.

Optionally, in some implementations, in a slot for transmitting the repetition of the uplink control channel by the terminal device, the uplink control channel is mapped to *M* time-domain symbols starting from a first starting symbol, where the first starting symbol is a first time-domain symbol in the slot with a symbol direction the same as the transmission direction of the uplink control channel, and *M* is a smaller of a first value and a second value, where the first value is a preconfigured maximum number of time-domain symbols available for transmitting the uplink control channel in a slot, and the second value is the number of symbols that start from the first starting symbol and each have a symbol direction the same as the transmission direction of the uplink control channel.

Optionally, in some implementations, the uplink control channel is mapped to the *M* time-domain symbols starting from the first starting symbol when at least one of following conditions is not satisfied: a symbol direction of a preconfigured starting symbol is the same as the transmission direction of the uplink control channel, or a symbol direction of each of *N* time-domain symbols starting from the preconfigured starting symbol is the same as the transmission direction of the uplink control channel, where *TV* is a preconfigured number of time-domain symbols available for transmitting the uplink control channel in a slot.

Optionally, in some implementations, in a slot for transmitting the repetition of the uplink control channel by the terminal device, the uplink control channel is mapped to *N* time-domain symbols starting from a preconfigured starting symbol, where *N* is a preconfigured number of time-domain symbols available for transmitting the uplink control channel in a slot.

Optionally, in some implementations, the uplink control channel is mapped to the *TV* time-domain symbols starting from the preconfigured starting symbol when the following conditions are satisfied: a symbol direction of the preconfigured starting symbol is the same as the transmission direction of the uplink control channel, and a symbol direction of each of the *TV* time-domain symbols starting from the preconfigured starting symbol is the same as the transmission direction of the uplink control channel, where *N* is the preconfigured number of time-domain symbols available for transmitting the uplink control channel in a slot.

Optionally, in some implementations, the above communication unit may be a communication interface or a transceiver, or an input/output interface of a communication chip or of a system-on chip (SOC). The above processing unit may be one or more processors.

It should be understood that, the terminal device 400 according to implementations of the disclosure may correspond to the terminal device in method implementations of the disclosure. The above-mentioned and other operations and/or functions of each unit in the terminal device 400 are respectively intended for implementing corresponding procedures performed by the terminal device in the method 200 illustrated in FIG. 3, which will not be repeated herein for the sake of simplicity.

FIG. 7 is a schematic block diagram of a network device according to implementations of the disclosure. The network device 500 illustrated in FIG. 7 includes a processing unit 510. The processing unit 510 is configured to determine, according to a slot configuration in a frame structure used by a terminal device, a time-domain resource location for transmitting a repetition of an uplink control channel by the terminal device.

Optionally, in some implementations, the time-domain resource location for transmitting the repetition of the uplink control channel includes at least one of: a slot for transmitting the repetition of the uplink control channel, or a time-domain symbol to which the uplink control channel is mapped, in the slot for transmitting the repetition of the uplink control channel.

Optionally, in some implementations, the processing unit 510 is specifically configured to determine, from a starting slot, a slot for transmitting a *k^{th}* repetition of the uplink control channel by the terminal device, according to the slot configuration in the frame structure used by the terminal device, where *k* is a positive integer.

Optionally, in some implementations, the starting slot is determined according to a slot and a slot offset indicated by DCI, where the slot is for transmitting a PDSCH, the slot offset is an offset of a slot for transmitting control information corresponding to the PDSCH relative to the slot for transmitting the PDSCH, and the uplink control channel is for carrying the control information.

Optionally, in some implementations, the slot for transmitting the *k^{th}* repetition of the uplink control channel by the terminal device satisfies at least one of the number of available time-domain symbols in the slot being greater than or equal to a minimum number of time-domain symbols that can be transmitted in an uplink control channel format corresponding to the uplink control channel, or the number of available time-domain symbols in the slot being greater than or equal to a second threshold.

Optionally, in some implementations, the available time-domain symbols in the slot include uplink time-domain symbols and/or flexible time-domain symbols in the slot.

Optionally, in some implementations, a slot in which the number of transmissions of the uplink control channel reaches a preconfigured number of repetitions is an ending slot for transmitting repetitions of the uplink control channel by the terminal device.

Optionally, in some implementations, the processing unit 510 is further configured to determine a time-domain symbol to which the uplink control channel is mapped in each slot, according to a symbol direction of each time-domain symbol in each slot for transmitting the repetition of the uplink control channel by the terminal device and a transmission direction of the uplink control channel.

Optionally, in some implementations, in a slot for transmitting the repetition of the uplink control channel by the terminal device, the uplink control channel is mapped to *M* time-domain symbols starting from a first starting symbol, where the first starting symbol is a first time-domain symbol in the slot with a symbol direction the same as the transmission direction of the uplink control channel, and *M* is a smaller of a first value and a second value, where the first value is a preconfigured maximum number of time-domain symbols available for transmitting the uplink control channel in a slot, and the second value is the number of symbols that start from the first starting symbol and each have a symbol direction the same as the transmission direction of the uplink control channel.

Optionally, in some implementations, the uplink control channel is mapped to the *M* time-domain symbols starting from the first starting symbol when at least one of following conditions is not satisfied: a symbol direction of a preconfigured starting symbol is the same as the transmission direction of the uplink control channel, or a symbol direction of each of *N* time-domain symbols starting from the preconfigured starting symbol is the same as the transmission direction of the uplink control channel, where *TV* is a preconfigured number of time-domain symbols available for transmitting the uplink control channel in a slot.

Optionally, in some implementations, in a slot for transmitting the repetition of the uplink control channel by the terminal device, the uplink control channel is mapped to *N* time-domain symbols starting from a preconfigured starting symbol, where *N* is a preconfigured number of time-domain symbols available for transmitting the uplink control channel in a slot.

Optionally, in some implementations, the uplink control channel is mapped to the *N* time-domain symbols starting from the preconfigured starting symbol when the following conditions are satisfied: a symbol direction of the preconfigured starting symbol is the same as the transmission direction of the uplink control channel, and a symbol direction of each of the *N* time-domain symbols starting from the preconfigured starting symbol is the same as the transmission direction of the uplink control channel, where *N* is the preconfigured number of time-domain symbols available for transmitting the uplink control channel in a slot.

Optionally, in some implementations, the processing unit above may be one or more processors.

It should be understood that, the network device 500 according to implementations of the disclosure may correspond to the network device in the method implementations of the disclosure, and the above and other operations and/or functions of various units of the network device 500 are respectively intended for implementing corresponding procedures performed by the network device in the method 300 illustrated in FIG. 5, which will not be repeated herein for the sake of simplicity.

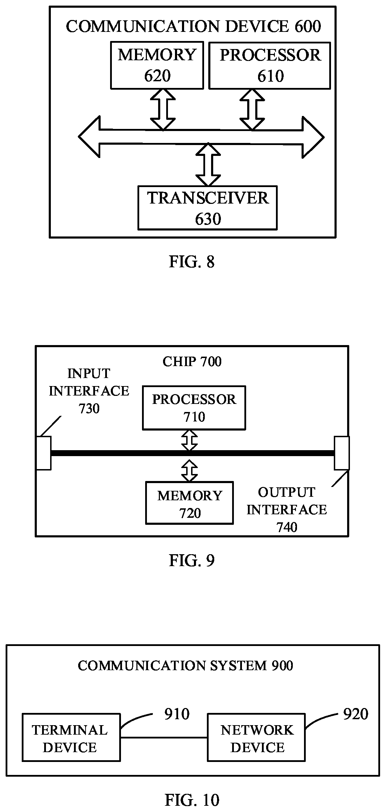

FIG. 8 is a schematic structural diagram of a communication device 600 provided in implementations of the disclosure. The communication device 600 illustrated in FIG. 8 includes a processor 610. The processor 610 can invoke and execute a computer program stored in a memory to perform the method in implementations of the disclosure.

Optionally, as illustrated in FIG. 8, the communication device 600 may further include the memory 620. The processor 610 can invoke and execute the computer program stored in the memory 620 to perform the method in implementations of the disclosure.

The memory 620 may be a separate device independent of the processor 610, or may be integrated into the processor 610.

Optionally, as illustrated in FIG. 8, the communication device 600 may further include a transceiver 630. The processor 610 can control the transceiver 630 to communicate with other devices, specifically, to transmit information or data to other devices or to receive information or data transmitted by other devices.

The transceiver 630 may include a transmitter and a receiver. The transceiver 630 may further include an antenna, where one or more antennas can be provided.

Optionally, the communication device 600 may be operable as the network device in implementations of the disclosure, and the communication device 600 can implement the operations performed by the network device in various methods in implementations of the disclosure, which will not be repeated herein for the sake of simplicity.

Optionally, the communication device 600 may be operable as the mobile terminal/the terminal device in implementations of the disclosure, and the communication device 600 can implement the operations performed by the mobile terminal/the terminal device in various methods in implementations of the disclosure, which will not be repeated herein for the sake of simplicity.

FIG. 9 is a schematic structural diagram of a chip provided in implementations of the disclosure. As illustrated in FIG. 9, the chip 700 includes a processor 710. The processor 710 can invoke and execute a computer program stored in a memory to perform the method in implementations of the disclosure.

Optionally, as illustrated in FIG. 9, the chip 700 further includes the memory 720. The processor 710 can invoke and execute the computer program stored in the memory 720 to perform the method in implementations of the disclosure.

The memory 720 may be a separate device independent of the processor 710, or may be integrated into the processor 710.

Optionally, the chip 700 may further include an input interface 730. The processor 710 can control the input interface 730 to communicate with other devices or chips, specifically, to obtain information or data transmitted by other devices or chips.

Optionally, the chip 700 may further include an output interface 740. The processor 710 can control the output interface 740 to communicate with other devices or chips, specifically, to output information or data to other devices or chips.

Optionally, the chip is applicable to the network device in implementations of the disclosure. The chip can implement the operations performed by the network device in various methods in implementations of the disclosure, which will not be repeated herein for the sake of simplicity.

Optionally, the chip is applicable to the mobile terminal/the terminal device in implementations of the disclosure. The chip can implement the operations performed by the mobile terminal/the terminal device in various methods in implementations of the disclosure, which will not be repeated herein for the sake of simplicity.

It should be understood that, the chip in implementations of the disclosure may also be referred to as a system-on-chip (SOC).

FIG. 10 is a schematic block diagram of a communication system 900 provided in implementations of the disclosure. As illustrated in FIG. 10, the communication system 900 includes a terminal device 910 and a network device 920.

The terminal device 910 can implement functions in the foregoing method that are implemented by a terminal device, and the network device 920 can implement functions in the foregoing method that are implemented by a network device, which will not be repeated herein for the sake of simplicity.

It should be understood that, the processor in implementations of the disclosure may be an integrated circuit chip with signal processing capabilities. During implementation, each operation of the foregoing method implementations may be completed by an integrated logic circuit of hardware in the processor or an instruction in the form of software. The processor may be a general-purpose processor, a digital signal processor (DSP), an application specific integrated circuit (ASIC), a field programmable gate array (FPGA), or other programmable logic devices, discrete gates or transistor logic devices, discrete hardware components. The methods, operations, and logic blocks disclosed in implementations of the disclosure can be implemented or executed. The general-purpose processor may be a microprocessor, or the processor may be any conventional processor or the like. The operations of the method disclosed in implementations of the disclosure may be directly implemented by a hardware decoding processor, or may be performed by hardware and software modules in the decoding processor. The software module may be located in a storage medium such as a random access memory (RAM), a flash memory, a read only memory (ROM), a programmable ROM (PROM), or an electrically erasable programmable memory, registers, and the like. The storage medium is located in the memory. The processor reads the information in the memory, and completes the operations of the method described above with the hardware thereof.

It can be understood that, the memory in implementations of the disclosure may be a volatile memory or a non-volatile memory, or may include both the volatile memory and the non-volatile memory. The non-volatile memory may be a ROM, a PROM, an erasable PROM (EPROM), an electrically EPROM (EEPROM), or flash memory. The volatile memory may be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that, the memory of the systems and methods described in the disclosure is intended to include, but is not limited to, these and any other suitable types of memory.

It should be understood that, the memory above is intended for illustration rather than limitation. For example, the memory in implementations of the disclosure may also be an SRAM, a DRAM, an SDRAM, a DDR SDRAM, an ESDRAM, a SLDRAM, a DR RAM, etc. In other words, the memory in implementations of the disclosure is intended to include, but is not limited to, these and any other suitable types of memory.

A computer-readable storage medium is further provided in implementations of the disclosure. The computer-readable storage medium is configured to store a computer program.

Optionally, the computer-readable storage medium is applicable to the network device in implementations of the disclosure. The computer program causes a computer to implement the operations performed by the network device in various methods in implementations of the disclosure, which will not be repeated herein for the sake of simplicity.

Optionally, the computer-readable storage medium is applicable to the mobile terminal/the terminal device in implementations of the disclosure. The computer program causes a computer to implement the operations performed by the mobile terminal/the terminal device in various methods in implementations of the disclosure, which will not be repeated herein for the sake of simplicity.

A computer program product is further provided in implementations of the disclosure. The computer program product includes computer program instructions.

Optionally, the computer program product is applicable to the network device in implementations of the disclosure. The computer program instructions cause a computer to implement the operations performed by the network device in various methods in implementations of the disclosure, which will not be repeated herein for the sake of simplicity.

Optionally, the computer program product is applicable to the mobile terminal/the terminal device in implementations of the disclosure. The computer program instructions cause a computer to implement the operations performed by the mobile terminal/the terminal device in various methods in implementations of the disclosure, which will not be repeated herein for the sake of simplicity.

A computer program is further provided in implementations of the disclosure.

Optionally, the computer program is applicable to the network device in implementations of the disclosure. The computer program, when executed by a computer, causes the computer to implement the operations performed by the network device in various methods in implementations of the disclosure, which will not be repeated herein for the sake of simplicity.

Optionally, the computer program is applicable to the mobile terminal/the terminal device in implementations of the disclosure. The computer program, when executed by a computer, cause the computer to implement the operations performed by the mobile terminal/the terminal device in various methods in implementations of the disclosure, which will not be repeated herein for the sake of simplicity.

Those of ordinary skill in the art will appreciate that units and algorithmic operations of various examples described in connection with implementations of the disclosure can be implemented by electronic hardware or by a combination of computer software and electronic hardware. Whether these functions are performed by means of hardware or software depends on the particular application and the design constraints of the associated technical solutions. Those skilled in the art may use different methods with regard to each particular application to implement the described functionality, but such implementations should not be regarded as lying beyond the scope of the disclosure.

It will be evident to those skilled in the art that, for the sake of convenience and simplicity, in terms of the specific working processes of the foregoing systems, apparatuses, and units, reference can be made to the corresponding processes of the above method implementations, which will not be repeated herein.

It will be appreciated that the systems, apparatuses, and methods disclosed in implementations of the disclosure may also be implemented in various other manners. For example, the above apparatus implementations are merely illustrative, e.g., the division of units is only a division of logical functions, and there may be other manners of division available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interfaces, devices, or units, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units in various implementations of the disclosure may be integrated into one processing unit or may be present as the number of physically separated units, and two or more units may be integrated into one.

If the functions are implemented as software functional units and sold or used as standalone products, they may be stored in a computer-readable storage medium. Based on such an understanding, the essential technical solutions, or the portion that contributes to the prior art, or part of the technical solutions of the disclosure may be embodied as software products. The computer software products can be stored in a storage medium and may include multiple instructions that can cause a computing device, e.g., a personal computer, a server, a network device, etc., to execute some or all operations of the methods described in various implementations of the disclosure. The above storage medium may include various kinds of media that can store program codes, such as a universal serial bus (USB) flash disk, a mobile hard drive, a ROM, a RAM, a magnetic disk, or an optical disk.

The above are some specific implementations of the disclosure, but the protection scope of the disclosure is not limited thereto. Any changes or substitutions that can be easily conceived by those skilled in the art within the technical scope disclosed by the disclosure should be covered by the protection scope of the disclosure. Therefore, the protection scope of the disclosure should be subject to the protection scope of the claims.

## Claims

1. A method for transmitting a repetition of a control channel, comprising:
determining, by a terminal device, a time-domain resource location for transmitting a repetition of an uplink control channel, according to a slot configuration in a frame structure used by the terminal device.

2. The method of claim 1, wherein the time-domain resource location for transmitting the repetition of the uplink control channel comprises at least one of:
a slot for transmitting the repetition of the uplink control channel; or
a time-domain symbol, to which the uplink control channel is mapped, in the slot for transmitting the repetition of the uplink control channel.

3. The method of claim 1 or 2, wherein determining, by the terminal device, the time-domain resource location for transmitting the repetition of the uplink control channel, according to the slot configuration in the frame structure used by the terminal device comprises:
determining the time-domain resource location for transmitting the repetition of the uplink control channel according to the slot configuration in the frame structure used by the terminal device, when a number of bits of control information carried in the uplink control channel is less than or equal to a first threshold.

4. The method of claim 3, wherein the first threshold is 11 or 22.

5. The method of any of claims 1 to 4, wherein determining, by the terminal device, the time-domain resource location for transmitting the repetition of the uplink control channel, according to the slot configuration in the frame structure used by the terminal device comprises:
determining, by the terminal device from a starting slot, a slot for transmitting a *k^{th}* repetition of the uplink control channel, according to the slot configuration in the frame structure used by the terminal device, k being a positive integer.

6. The method of claim 5, wherein the starting slot is determined according to a slot and a slot offset indicated by downlink control information (DCI), wherein the slot is for transmitting a physical downlink shared channel (PDSCH), the slot offset is an offset of a slot for transmitting control information corresponding to the PDSCH relative to the slot for transmitting the PDSCH, and the uplink control channel is for carrying the control information.

7. The method of claim 5 or 6, wherein the slot for transmitting the *k^{th}* repetition of the uplink control channel by the terminal device satisfies at least one of
a number of available time-domain symbols in the slot being greater than or equal to a minimum number of time-domain symbols that can be transmitted in an uplink control channel format corresponding to the uplink control channel; or
the number of available time-domain symbols in the slot being greater than or equal to a second threshold.

8. The method of claim 7, wherein the available time-domain symbols in the slot comprise uplink time-domain symbols and/or flexible time-domain symbols in the slot.

9. The method of any of claims 1 to 8, wherein a slot in which a number of transmissions of the uplink control channel reaches a preconfigured number of repetitions is an ending slot for transmitting repetitions of the uplink control channel by the terminal device.

10. The method of any of claims 1 to 8, further comprising:
stopping, by the terminal device, the repetition of the uplink control channel, when a slot offset of a slot for a *k^{th}* repetition of the uplink control channel relative to a starting slot is greater than a slot offset threshold, k being less than a preconfigured number of repetitions.

11. The method of any of claims 1 to 10, wherein determining, by the terminal device, the time-domain resource location for transmitting the repetition of the uplink control channel, according to the slot configuration in the frame structure used by the terminal device comprises:
determining, by the terminal device, a time-domain symbol to which the uplink control channel is mapped in each slot, according to a symbol direction of each time-domain symbol in each slot for transmitting the repetition of the uplink control channel and a transmission direction of the uplink control channel.

12. The method of claim 11, wherein in a slot for transmitting the repetition of the uplink control channel by the terminal device, the uplink control channel is mapped to M time-domain symbols starting from a first starting symbol, wherein
the first starting symbol is a first time-domain symbol in the slot with a symbol direction the same as the transmission direction of the uplink control channel, and
*M* is a smaller of a first value and a second value, wherein the first value is a preconfigured maximum number of time-domain symbols available for transmitting the uplink control channel in a slot, and the second value is a number of symbols that start from the first starting symbol and each have a symbol direction the same as the transmission direction of the uplink control channel.

13. The method of claim 12, wherein the uplink control channel is mapped to the *M* time-domain symbols starting from the first starting symbol when at least one of following conditions is not satisfied:
a symbol direction of a preconfigured starting symbol is the same as the transmission direction of the uplink control channel; or
a symbol direction of each of *N* time-domain symbols starting from the preconfigured starting symbol is the same as the transmission direction of the uplink control channel, wherein *N* is a preconfigured number of time-domain symbols available for transmitting the uplink control channel in a slot.

14. The method of claim 11, wherein in a slot for transmitting the repetition of the uplink control channel by the terminal device, the uplink control channel is mapped to *N* time-domain symbols starting from a preconfigured starting symbol, wherein *N* is a preconfigured number of time-domain symbols available for transmitting the uplink control channel in a slot.

15. The method of claim 14, wherein the uplink control channel is mapped to the *N* time-domain symbols starting from the preconfigured starting symbol when the following conditions are satisfied:
a symbol direction of the preconfigured starting symbol is the same as the transmission direction of the uplink control channel; and
a symbol direction of each of the *N* time-domain symbols starting from the preconfigured starting symbol is the same as the transmission direction of the uplink control channel, wherein *N* is the preconfigured number of time-domain symbols available for transmitting the uplink control channel in a slot.

16. A method for transmitting a repetition of a control channel, comprising:
determining, by a network device, a time-domain resource location for transmitting a repetition of an uplink control channel by a terminal device, according to a slot configuration in a frame structure used by the terminal device.

17. The method of claim 16, wherein the time-domain resource location for transmitting the repetition of the uplink control channel comprises at least one of:
a slot for transmitting the repetition of the uplink control channel; or
a time-domain symbol, to which the uplink control channel is mapped, in the slot for transmitting the repetition of the uplink control channel.

18. The method of claim 16 or 17, wherein determining, by the network device, the time-domain resource location for transmitting the repetition of the uplink control channel by the terminal device, according to the slot configuration in the frame structure used by the terminal device comprises:
determining, by the network device from a starting slot, a slot for transmitting a *k^{th}* repetition of the uplink control channel by the terminal device, according to the slot configuration in the frame structure used by the terminal device, *k* being a positive integer.

19. The method of claim 18, wherein the starting slot is determined according to a slot and a slot offset indicated by downlink control information (DCI), wherein the slot is for transmitting a physical downlink shared channel (PDSCH), the slot offset is an offset of a slot for transmitting control information corresponding to the PDSCH relative to the slot for transmitting the PDSCH, and the uplink control channel is for carrying the control information.

20. The method of claim 18 or 19, wherein the slot for transmitting the *k^{th}* repetition of the uplink control channel by the terminal device satisfies at least one of
a number of available time-domain symbols in the slot being greater than or equal to a minimum number of time-domain symbols that can be transmitted in an uplink control channel format corresponding to the uplink control channel; or
the number of available time-domain symbols in the slot being greater than or equal to a second threshold.

21. The method of claim 20, wherein the available time-domain symbols in the slot comprise uplink time-domain symbols and/or flexible time-domain symbols in the slot.

22. The method of any of claims 16 to 21, wherein a slot in which a number of transmissions of the uplink control channel reaches a preconfigured number of repetitions is an ending slot for transmitting repetitions of the uplink control channel by the terminal device.

23. The method of any of claims 16 to 22, wherein determining, by the network device, the time-domain resource location for transmitting the repetition of the uplink control channel, according to the slot configuration in the frame structure used by the terminal device comprises:
determining, by the network device, a time-domain symbol to which the uplink control channel is mapped in each slot, according to a symbol direction of each time-domain symbol in each slot for transmitting the repetition of the uplink control channel by the terminal device and a transmission direction of the uplink control channel.

24. The method of claim 23, wherein in a slot for transmitting the repetition of the uplink control channel by the terminal device, the uplink control channel is mapped to *M* time-domain symbols starting from a first starting symbol, wherein
the first starting symbol is a first time-domain symbol in the slot with a symbol direction the same as the transmission direction of the uplink control channel, and
*M* is a smaller of a first value and a second value, wherein the first value is a preconfigured maximum number of time-domain symbols available for transmitting the uplink control channel in a slot, and the second value is a number of symbols that start from the first starting symbol and each have a symbol direction the same as the transmission direction of the uplink control channel.

25. The method of claim 24, wherein the uplink control channel is mapped to the *M* time-domain symbols starting from the first starting symbol when at least one of following conditions is not satisfied:
a symbol direction of a preconfigured starting symbol is the same as the transmission direction of the uplink control channel; or
a symbol direction of each of *N* time-domain symbols starting from the preconfigured starting symbol is the same as the transmission direction of the uplink control channel, wherein *N* is a preconfigured number of time-domain symbols available for transmitting the uplink control channel in a slot.

26. The method of claim 23, wherein in a slot for transmitting the repetition of the uplink control channel by the terminal device, the uplink control channel is mapped to *N* time-domain symbols starting from a preconfigured starting symbol, wherein *N* is a preconfigured number of time-domain symbols available for transmitting the uplink control channel in a slot.

27. The method of claim 26, wherein the uplink control channel is mapped to the *N* time-domain symbols starting from the preconfigured starting symbol when the following conditions are satisfied:
a symbol direction of the preconfigured starting symbol is the same as the transmission direction of the uplink control channel; and
a symbol direction of each of the N time-domain symbols starting from the preconfigured starting symbol is the same as the transmission direction of the uplink control channel, wherein *N* is the preconfigured number of time-domain symbols available for transmitting the uplink control channel in a slot.

28. A terminal device, comprising:
a processing unit configured to determine, according to a slot configuration in a frame structure used by the terminal device, a time-domain resource location for transmitting a repetition of an uplink control channel.

29. The terminal device of claim 28, wherein the time-domain resource location for transmitting the repetition of the uplink control channel comprises at least one of
a slot for transmitting the repetition of the uplink control channel; or
a time-domain symbol, to which the uplink control channel is mapped, in the slot for transmitting the repetition of the uplink control channel.

30. The terminal device of claim 28 or 29, wherein the processing unit is further configured to determine the time-domain resource location for transmitting the repetition of the uplink control channel according to the slot configuration in the frame structure used by the terminal device, when a number of bits of control information carried in the uplink control channel is less than or equal to a first threshold.

31. The terminal device of claim 30, wherein the first threshold is 11 or 22.

32. The terminal device of any of claims 28 to 31, wherein the processing unit is further configured to determine, from a starting slot, a slot for transmitting a *k^{th}* repetition of the uplink control channel, according to the slot configuration in the frame structure used by the terminal device, *k* being a positive integer.

33. The terminal device of claim 32, wherein the starting slot is determined according to a slot and a slot offset indicated by downlink control information (DCI), wherein the slot is for transmitting a physical downlink shared channel (PDSCH), the slot offset is an offset of a slot for transmitting control information corresponding to the PDSCH relative to the slot for transmitting the PDSCH, and the uplink control channel is for carrying the control information.

34. The terminal device of claim 32 or 33, wherein the slot for transmitting the *k^{th}* repetition of the uplink control channel by the terminal device satisfies at least one of:
a number of available time-domain symbols in the slot being greater than or equal to a minimum number of time-domain symbols that can be transmitted in an uplink control channel format corresponding to the uplink control channel; or
the number of available time-domain symbols in the slot being greater than or equal to a second threshold.

35. The terminal device of claim 34, wherein the available time-domain symbols in the slot comprise uplink time-domain symbols and/or flexible time-domain symbols in the slot.

36. The terminal device of any of claims 28 to 35, wherein a slot in which a number of transmissions of the uplink control channel reaches a preconfigured number of repetitions is an ending slot for transmitting repetitions of the uplink control channel by the terminal device.

37. The terminal device of any of claims 28 to 35, further comprising:
a communication unit configured to stop the repetition of the uplink control channel, when a slot offset of a slot for a *k^{th}* repetition of the uplink control channel relative to a starting slot is greater than a slot offset threshold, *k* being less than a preconfigured number of repetitions.

38. The terminal device of any of claims 28 to 37, wherein the processing unit is further configured to determine a time-domain symbol to which the uplink control channel is mapped in each slot, according to a symbol direction of each time-domain symbol in each slot for transmitting the repetition of the uplink control channel and a transmission direction of the uplink control channel.

39. The terminal device of claim 38, wherein in a slot for transmitting the repetition of the uplink control channel by the terminal device, the uplink control channel is mapped to *M* time-domain symbols starting from a first starting symbol, wherein
the first starting symbol is a first time-domain symbol in the slot with a symbol direction the same as the transmission direction of the uplink control channel, and
*M* is a smaller of a first value and a second value, wherein the first value is a preconfigured maximum number of time-domain symbols available for transmitting the uplink control channel in a slot, and the second value is a number of symbols that start from the first starting symbol and each have a symbol direction the same as the transmission direction of the uplink control channel.

40. The terminal device of claim 39, wherein the uplink control channel is mapped to the *M* time-domain symbols starting from the first starting symbol when at least one of following conditions is not satisfied:
a symbol direction of a preconfigured starting symbol is the same as the transmission direction of the uplink control channel; or
a symbol direction of each of *N* time-domain symbols starting from the preconfigured starting symbol is the same as the transmission direction of the uplink control channel, wherein *N* is a preconfigured number of time-domain symbols available for transmitting the uplink control channel in a slot.

41. The terminal device of claim 38, wherein in a slot for transmitting the repetition of the uplink control channel by the terminal device, the uplink control channel is mapped to *N* time-domain symbols starting from a preconfigured starting symbol, wherein *N* is a preconfigured number of time-domain symbols available for transmitting the uplink control channel in a slot.

42. The terminal device of claim 41, wherein the uplink control channel is mapped to the *N* time-domain symbols starting from the preconfigured starting symbol when the following conditions are satisfied:
a symbol direction of the preconfigured starting symbol is the same as the transmission direction of the uplink control channel; and
a symbol direction of each of the *N* time-domain symbols starting from the preconfigured starting symbol is the same as the transmission direction of the uplink control channel, wherein *N* is the preconfigured number of time-domain symbols available for transmitting the uplink control channel in a slot.

43. A network device, comprising:
a processing unit configured to determine, according to a slot configuration in a frame structure used by a terminal device, a time-domain resource location for transmitting a repetition of an uplink control channel by the terminal device.

44. The network device of claim 43, wherein the time-domain resource location for transmitting the repetition of the uplink control channel comprises at least one of
a slot for transmitting the repetition of the uplink control channel; or
a time-domain symbol, to which the uplink control channel is mapped, in the slot for transmitting the repetition of the uplink control channel.

45. The network device of claim 43 or 44, wherein the processing unit is specifically configured to determine, from a starting slot, a slot for transmitting a *k^{th}* repetition of the uplink control channel by the terminal device, according to the slot configuration in the frame structure used by the terminal device, *k* being a positive integer.

46. The network device of claim 45, wherein the starting slot is determined according to a slot and a slot offset indicated by downlink control information (DCI), wherein the slot is for transmitting a physical downlink shared channel (PDSCH), the slot offset is an offset of a slot for transmitting control information corresponding to the PDSCH relative to the slot for transmitting the PDSCH, and the uplink control channel is for carrying the control information.

47. The network device of claim 45 or 46, wherein the slot for transmitting the *k^{th}* repetition of the uplink control channel by the terminal device satisfies at least one of:
a number of available time-domain symbols in the slot being greater than or equal to a minimum number of time-domain symbols that can be transmitted in an uplink control channel format corresponding to the uplink control channel; or
the number of available time-domain symbols in the slot being greater than or equal to a second threshold.

48. The network device of claim 47, wherein the available time-domain symbols in the slot comprise uplink time-domain symbols and/or flexible time-domain symbols in the slot.

49. The network device of any of claims 43 to 48, wherein a slot in which a number of transmissions of the uplink control channel reaches a preconfigured number of repetitions is an ending slot for transmitting repetitions of the uplink control channel by the terminal device.

50. The network device of any of claims 43 to 49, wherein the processing unit is further configured to determine a time-domain symbol to which the uplink control channel is mapped in each slot, according to a symbol direction of each time-domain symbol in each slot for transmitting the repetition of the uplink control channel by the terminal device and a transmission direction of the uplink control channel.

51. The network device of claim 50, wherein in a slot for transmitting the repetition of the uplink control channel by the terminal device, the uplink control channel is mapped to *M* time-domain symbols starting from a first starting symbol, wherein
the first starting symbol is a first time-domain symbol in the slot with a symbol direction the same as the transmission direction of the uplink control channel, and
*M* is a smaller of a first value and a second value, wherein the first value is a preconfigured maximum number of time-domain symbols available for transmitting the uplink control channel in a slot, and the second value is a number of symbols that start from the first starting symbol and each have a symbol direction the same as the transmission direction of the uplink control channel.

52. The network device of claim 51, wherein the uplink control channel is mapped to the *M* time-domain symbols starting from the first starting symbol when at least one of following conditions is not satisfied:
a symbol direction of a preconfigured starting symbol is the same as the transmission direction of the uplink control channel; or
a symbol direction of each of *N* time-domain symbols starting from the preconfigured starting symbol is the same as the transmission direction of the uplink control channel, wherein *N* is a preconfigured number of time-domain symbols available for transmitting the uplink control channel in a slot.

53. The network device of claim 50, wherein in a slot for transmitting the repetition of the uplink control channel by the terminal device, the uplink control channel is mapped to *N* time-domain symbols starting from a preconfigured starting symbol, wherein *TV* is a preconfigured number of time-domain symbols available for transmitting the uplink control channel in a slot.

54. The network device of claim 53, wherein the uplink control channel is mapped to the *N* time-domain symbols starting from the preconfigured starting symbol when the following conditions are satisfied:
a symbol direction of the preconfigured starting symbol is the same as the transmission direction of the uplink control channel; and
a symbol direction of each of the *N* time-domain symbols starting from the preconfigured starting symbol is the same as the transmission direction of the uplink control channel, wherein *N* is the preconfigured number of time-domain symbols available for transmitting the uplink control channel in a slot.

55. A terminal device, comprising:
a memory configured to store a computer program; and
a processor configured to invoke and execute the computer program stored in the memory to perform the method of any of claims 1 to 15.

56. A chip, comprising:
a processor configured to invoke and execute a computer program stored in a memory to cause a device equipped with the chip to perform the method of any of claims 1 to 15.

57. A computer-readable storage medium configured to store a computer program, wherein the computer program causes a computer to perform the method of any of claims 1 to 15.

58. A computer program product comprising computer program instructions, wherein the computer program instructions cause a computer to perform the method of any of claims 1 to 13.

59. A computer program causing a computer to perform the method of any of claims 1 to 13.

60. A network device, comprising:
a memory configured to store a computer program; and
a processor configured to invoke and execute the computer program stored in the memory to perform the method of any of claims 16 to 27.

61. A chip, comprising:
a processor configured to invoke and execute a computer program stored in a memory, to cause a device equipped with the chip to perform the method of any of claims 16 to 27.

62. A computer-readable storage medium configured to store a computer program, wherein the computer program causes a computer to perform the method of any of claims 16 to 27.

63. A computer program product comprising computer program instructions, wherein the computer program instructions cause a computer to perform the method of any of claims 16 to 27.

64. A computer program causing a computer to perform the method of any of claims 16 to 27.
